# EUROPEAN PATENT APPLICATION

(11) **EP 1 921 409 A2**
(43) Date of publication of application: **14.05.2008**
(21) Application number: 08002532.3
(22) Date of filing: 05.07.2002
(51) Int. Cl.: F28D 5/00

(54) **Cooling system**

(30) Priority: 13.07.2001 AU PR633201; 12.09.2001 AU PR764401; 06.03.2002 AU 2129702
(62) Divisional of application: 02742532.1
(71) Applicant: Müller Industries Australia Pty Ltd., Canterbury, VIC 3126 (AU)
(72) Inventor: The designation of the inventor has not yet been filed
(74) Representative: Findlay, Alice Rosemary

(57) **Abstract**

The invention provides a cooling fluid heat exchange unit including:
a primary heat exchange unit including a closed circuit for circulating primary circuit fluid; and
a secondary heat exchange unit adapted to provide cooled air in communication with the primary heat exchange unit.

The closed circuit for the cooling fluid as it passes through the primary heat exchange unit ensures that the cooling fluid is prevented from exposure to the atmosphere, and in particular, to the air forced through the heat exchange unit.

## Description

### FIELD OF THE INVENTION

The system and method of the present invention relates generally to the cooling of air and more particularly to a system and method of cooling air in systems including a heat exchange unit to effect heat transfer from a cooling fluid. The invention is particularly suited to cooling systems for relatively large volumes which is required in circumstances such as the cooling of air in large office buildings.

### BACKGROUND OF THE INVENTION

Areas occupied by people generally require some form of heating and/or cooling in order to maintain the area at a reasonable temperature. In some instances, statutory or contractual arrangements require an area or premises to be maintained within certain temperature limits.

Accordingly, heating and cooling systems have developed over time and exist in most modem premises in order to maintain the temperature in those premises within predetermined temperature limits.

Heating and cooling large areas such as office buildings usually requires a significant capital investment in the plant and equipment that effects the heating and/or cooling.

In warm climates, cooling systems incorporating a cooling tower have become a popular type of system for the cooling of large buildings. In this type of system, a refrigerant gas is used to cool air as it passes through a first heat exchange unit (evaporator) and having absorbed energy from the air, the refrigerant gas is passed to a second heat exchange unit (condenser) wherein heat is extracted from the refrigerant gas. The second heat exchange unit is supplied with water to effect cooling of the refrigerant gas and having absorbed energy, the water is generally transferred to a third heat exchange unit (cooling tower) in order to cool the water in preparation for further use. Whilst this type of system is commonly used for large office buildings, cooling towers unfortunately provide an environment conducive to the generation and distribution of a bacterium known as *legionella pneumophilia.* The bacterium becomes airborne and subsequent inhalation by people in the vicinity of a cooling tower may lead to the development of a disease commonly referred to Legionnaires' Disease.

The bacterium was first identified in Philadelphia, USA in July 1976 and since that time, infection in both sporadic and epidemic forms has occurred in Australia and many overseas countries. Epidemiological investigations have generally failed to identify the precise source of infection, however, cooling towers and water distribution systems are generally recognised as the most likely source. Legionnaires' Disease typically manifests itself as severe pneumonia with patients presenting early symptoms of malaise, muscle pains, headache and fever. Patients become increasingly short of breath and the respiratory symptoms progress to pneumonia, often culminating in respiratory failure. The development of Legionnaires' Disease is usually associated with mental confusion and delirium, vomiting and renal failure. The disease generally has an incubation period of 2 to 10 days and whilst the fatality rate from confirmed Legionnaires' Disease in Australia has decreased over the past six years, fatalities still occur. Legionnaires' Disease was proclaimed a Notifiable Disease in Australia in 1979 and all cases must be notified by health professionals to the relevant Heath Department upon detection.

Having recognised the propensity for cooling towers to generate and distribute the *legionelia pneumophilia* bacterium, various approaches have been implemented to minimise the likelihood that a tower can form and distribute the bacterium. In particular, treatment of cooling tower water with corrosion inhibitors, surfactants, biocides and other chemicals is frequently proposed in order to reduce microbial growth.

Generally, a broad spectrum biocide is recommended for the water treatment process in order to reduce total microbial load in cooling tower water. However, in the dynamic environment of a cooling tower system, the performance of chemicals is different from that in controlled laboratory trials. For example, cooling tower water is subjected to temperature changes and varying flow velocities at different locations in the system. Many other parameters including pH level, conductivity, total dissolved solids, suspended matter and the biological mass within the system can also vary over time.

As a result; the efficacy of water treatment with a broad spectrum biocide cannot be predetermined for any particular environment and as such, ongoing sampling of cooling tower water is required to ensure that microbial growth has been limited to an acceptable level in addition to any chemical treatment. Apart from the cost of the biocides, the requirement for ongoing sampling has the effect of significantly increasing the maintenance cost for a cooling tower system.

The use of ozone has also been proposed and has been successfully used in some instances to reduce microbial growth. Although ozone is an unstable chemical, it is a powerful oxidising biocide and must be produced on-site by means of an ozone generator and used immediately for water treatment. Ozone disinfection is relatively new for the control of bacterial levels in cooling tower waters and it is generally recognised that care must be exercised to maintain the generators in accordance with manufacturers' recommendations thus ensuring optimum efficiency. Apart from the significant capital investment required for an ozone generator, there remains some doubt as to the efficacy of this type of system for preventing microbial growth and the spread of Legionnaires' Disease.

The use of ultraviolet light has also been proposed for the reduction of bacterial levels in cooling tower water. With these types of systems, the cooling tower water is exposed to ultraviolet radiation of a sufficient intensity to eliminate bacterium in the water. It is important to ensure that the water is exposed to a sufficient level of ultraviolet radiation intensity for the system to be effective. Sensors are generally used to monitor the intensity of the ultraviolet radiation and any reduction in efficacy as detected by the sensors generally provides an indication that maintenance is required. Ultraviolet radiation has no effect on the pH, odour or chemical composition of cooling tower water. However, the colour, tepidity and chemical composition of the water can interfere with ultraviolet radiation transmission and as such, determination of the ultraviolet absorbency of the water to be treated prior to installing ultraviolet equipment is usually advisable. Bacteria may be protected by tepidity, clumping or the presence of slime and accordingly, appropriate water filtration is usually recommended in conjunction with ultraviolet radiation systems.

Despite implementing such a system to destroy bacterium, the ultraviolet damage to bacterium can be significantly reversed by enzyme repair mechanisms such as those which operate in darkness and on subsequent exposure to bright light (photoreactivation). Once again, the installation of an ultraviolet radiation system involves a significant capital expenditure and is not an attractive option given that the efficacy of these systems is still currently questionable.

Various other proprietary devices have been proposed for the treatment of water including systems that expose the treated water to electromagnetic and electrostatic fields. There is a lack of conclusive scientific evidence to demonstrate that these proprietary devices have any significant effect on the microbial load in treated water. Survival and growth of the *legionella* bacteria in controlled laboratory field trials is currently being conducted for these systems.

Whilst filtration systems present the simplest method available for the reduction of microbial matter in water, a full-flow filtration plant that will remove fine particles is generally not practicable for most existing systems due to space and weight restrictions. Additionally, such filtration systems have associated installation and operational costs that generally render this approach economically infeasible. In any event, with any type of filtration system, there is necessarily an ongoing maintenance cost for backflushing and replacement of filters.

Irrespective of the water treatment systems currently in use, ongoing maintenance in the form of water sampling cannot be avoided and necessarily increases the ongoing maintenance cost for the operation of a cooling system incorporating a cooling tower.

Accordingly, it is an object of the present invention to provide a cooling system and method of cooling for systems that, under normal working conditions, eliminates the possibility of the cooling system generating airborne bacterium known as *legionella pneumophilia.*

A secondary object of the invention is to provide a cooling system and method of cooling for systems that enables existing cooling systems that could generate airborne bacterium known as *legionella pneumophilia* to be modified to eliminate any possibility of the system, under normal working conditions, generating such airborne bacterium.

Any discussion of documents, act, materials, devices, articles or the like which has been included in the present specification is solely for the purpose of providing a context for the present invention. It is not to be taken as an admission that any or all of these matters form part of the prior art base or were common general knowledge in Australia in the field relevant to the present invention as it existed before the priority date of each claim of this application.

### SUMMARY OF THE INVENTION

In one aspect, the present invention provides a cooling fluid heat exchange unit including:
a primary heat exchange unit including a closed circuit for cooling fluid;
an air cooler located upstream of the primary heat exchange unit; and
a fan arrangement operable to force air through the cooler and the primary heat exchange unit,
wherein said air cooler includes a moisture absorbent material that is, in use, maintained moist such that air forced through the cooler is cooled by the action of evaporation prior to being forced over a portion of the closed circuit in the primary heat exchange unit.

The closed circuit for the cooling fluid as it passes through the primary heat exchange unit ensures that the cooling fluid is prevented from exposure to the atmosphere, and in particular, to the air forced through the heat exchange unit. This separation removes the risk of the generation and distribution of the legionella bacterium. In practice, the closed circuit is likely to form part of a loop within a cooling system where the cooling fluid is transported from a location where the fluid is used to absorb thermal energy and subsequently transported to the heat exchange unit in order for the cooling fluid to release the absorbed thermal energy.

In a preferred embodiment, the cooled air emitted from the air cooler is substantially free of fluid in a liquid state. In a particularly preferred embodiment, the air cooler and the primary heat exchange unit are separated by a distance along the path of air flow from the cooler to the primary heat exchange unit to reduce the likelihood of fluid in a liquid state passing from the air cooler and impinging upon the primary heat exchange unit.

Preferably, the heat exchange unit includes a plurality of air inlets and outlets with the fan arrangement disposed therebetween and operable to draw air in through the plurality of inlets and force air out through the plurality of outlets. The air cooler may be located over the plurality of air inlets such that air drawn through the air cooler by the fan arrangement is cooled prior to being drawn or forced over the primary heat exchanger and subsequently through the plurality of air outlets.

Where the cooling fluid is water, the cooling water preferably passes through the primary heat exchanger in thermally conductive tubing, such as copper tubing, with drawn air passing over the tubing and removing thermal energy from the water passing through that tubing.

The air cooler preferably includes a water absorbent material similar to that used in evaporative cooling applications and may include wood fibre or cooling pad material such as that distributed under the trade mark "CELDEK". The moistened water absorbent material cools air passing through the material by the action of evaporation. This effect is used generally in evaporative cooling systems and water, separate from the cooling fluid, may be supplied to the water absorbent material using apparatus similar to that in current evaporative cooling systems.

The use of water for the air cooler that is separate to the cooling water passed through the primary heat exchanger does not pose any risk of generating or distributing the legionella bacterium as the air cooler water temperature does not rise to a sufficient temperature to present such a risk.

Generally, pads of water absorbent material would be located substantially vertically over the air inlets of the heat exchange unit and water would be applied to an upper portion of the water absorbent pads and would migrate through and moisten the entire pad. In the event that water is applied to the absorbent material paid at a rate faster than evaporation therefrom, a holding tank may be suspended below the material pads in order to collect water run-off. Any water run-off collected in a tank may be reused by pumping that water back to the upper portion of the material pads for reapplication thereto.

In a particularly preferred embodiment, a water absorbent material pad including a plurality of fluted apertures of a size less than 7mm is used as part of the air cooler. Ordinarily in evaporative cooling applications, a water absorbent material pad with a plurality of 7mm fluted apertures is used. However, in this embodiment of the invention, use of a pad with fluted apertures of a size less than the standard size of 7mm has been found to provide a more efficient cooling effect. This particular embodiment also uses variable pitch fans for drawing air through the primary heat exchanger and through the air cooler pads. As a result of the increased efficiency resulting from the use of a pad with fluted apertures less than 7mm, the overall pad size may be reduced whilst still achieving the same cooling effect that of a pad with standard sized fluted apertures. A reduction in the overall size of an air cooler pad may be significant for installations where a conversion from an existing cooling tower arrangement is required and there is limited physical space in which to install a new cooling fluid heat exchange unit.

In another embodiment, the cooling fluid comprises highly concentrated ammonia with a primary heat exchange unit comprising stainless steel or aluminium tubing effecting passage of the ammonia through the heat exchange unit. In this particular embodiment, the ammonia enters the primary heat exchange unit in a gaseous state and upon having thermal energy removed, the ammonia is emitted in a liquid state. Whilst ammonia has previously been used as a cooling fluid, it has only been feasible for extremely large installations. As a result of the improved cooling efficiency from use of an air cooling stage, an effective and economically feasible cooling fluid heat exchange unit using ammonia as the cooling fluid may be produced for smaller installations.

In another aspect, the present invention provides a method of cooling fluid in a cooling fluid heat exchange unit, the method including the steps of:
passing cooling fluid of a cooling system through a primary heat exchanger having a closed fluid circuit such that the cooling fluid is contained;
placing an air cooler upstream of the primary heat exchanger, and
causing a flow of air through the air cooler and over a portion of the closed fluid circuit wherein said air cooler includes a moisture absorbent material that is, in use, maintained moist such that the air is cooled by vaporising fluid.

In a particularly preferred embodiment, the cooling fluid heat exchange unit of the present invention is manufactured in a range of heat exchanging capacities such that a heat exchanger according to the present invention may be used to replace an existing cooling tower of a similar heat exchanging capacity.

In yet another aspect, the present invention provides a method of converting a cooling system incorporating a first heat exchange unit including a fluid cooling heat exchange unit where the fluid is exposed to air drawn through the heat exchange unit by replacing said first heat exchange unit with a second heat exchange unit including a primary heat exchanger and an air cooler including a moisture absorbent material that is, in use, maintained moist such that air forced through the air cooler is cooled by the action of vaporisation where the fluid in the primary heat exchange unit is contained and prevented from exposure to air forced through the air cooler and then subsequently passed through the second heat exchange unit, the method including of steps of:
disconnecting the first heat exchange unit cooling fluid inlet and outlet connection;
reconnecting the fluid inlet and outlet to the corresponding connection points of the second heat exchange unit; and
operating the cooling system.

In most conversions, it is likely that the first heat exchange unit will be removed to provide room for the second heat exchange unit although it is not essential.

In a further aspect, the present invention provides a cooling system having a fluid cooling heat exchange unit including:
a primary heat exchange unit including a closed circuit for cooling fluid;
an air cooler including a moisture absorbent material that is maintained moist for cooling air by evaporation said air cooler located upstream of said primary heat exchange unit; and
a fan arrangement operable to force air through said air cooler and said primary heat exchange unit,
wherein air forced through said air cooler is cooled prior to being forced over a portion of said closed circuit in said primary heat exchange unit.

In yet a further aspect, the present invention provides a cooling system having a fluid cooling heat exchange unit including:
a primary heat exchange unit including a closed circuit for circulating fluid; and
a secondary heat exchange unit including a moisture absorbent material that is, in use, maintained moist, the secondary heat exchange unit adapted to provide air cooled by the action of evaporation in communication with said primary heat exchange unit.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### BRIEF DESCRIPTION OF THE DRAWINGS

An example of the invention will now be described with reference to the accompanying drawings, in which:
Figure 1 is a schematic diagram illustrating the main components of a conventional cooling system including a heat exchange unit in the form of a cooling tower;
Figure 2 is a schematic diagram illustrating the main components of a cooling system incorporating an air-cooled condenser,
Figure 3 is a schematic diagram illustrating a cooling system incorporating a heat exchanger according to an embodiment of the present invention; and
Figures 4A and 4B are a side and sectional side view respectively of the heat exchange unit of Figure 3.

### DETAILED DESCRIPTION OF THE INVENTION

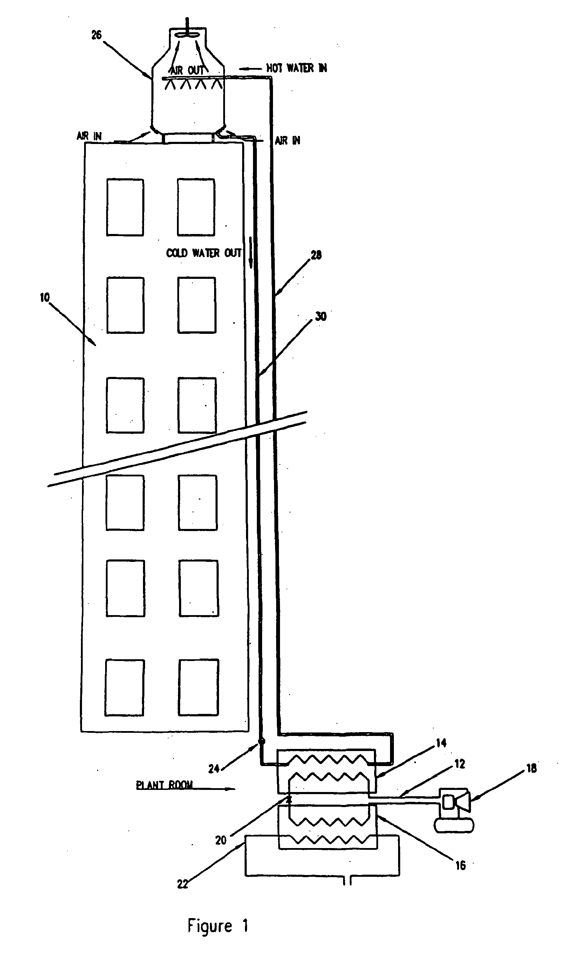

With reference to Figure 1, a schematic diagram of a conventional cooling system incorporating a cooling tower is provided. This type of system is common for large buildings that have a relatively large space to cool and are usually arranged such that the majority of the cooling system is located in the basement of the building with a cooling tower situated on the roof of that building.

In Figure 1, a building 10 has an installed cooling system comprising a refrigerant gas circuit 12 passing through a condenser 14 and an evaporator 16. The flow of refrigerant gas through the circuit 12 is driven by a compressor 18 and regulated by expansion valve 20. Air in the building 10 is generally cooled by drawing air through a duct in which a portion of the chilled water circuit 22 that effects cooling of air in the building 10 is not detailed herein.

Refrigerant gas is passed through the condenser 14 for the purpose of cooling the refrigerant gas. Generally, in large buildings, the refrigerant gas is cooled by the use of water. Subsequent to absorbing thermal energy from the refrigerant gas in the condenser 14, the water is transferred to a cooling tower 26 by way of a pump 24. As previously described, it is usual for cooling towers to be placed upon the roof of a building 10 as cooling towers are usually large and emit a substantial amount of noise during operation.

Hot water from the condenser 14 travels via pipe 28 to the water inlet of the cooling tower 26. The cooling tower 26 then extracts thermal energy from the water and cold water is drawn from the cooling tower 26 through pipe 30.

Cooling towers generally effect the removal of heat from cooling water by use of air flowing through the cooling tower to effect evaporation of a portion of the water. To evaporate some of the water, thus causing the water to transfer from a liquid to a gaseous state, thermal energy is required and this is extracted from the remaining water that continues to remain in a liquid state. Accordingly, as thermal energy is removed, the temperature of the water in the tower decreases.

The most commonly used form of cooling tower uses induced draught counter-flow where air is drawn through the tower by a fan located at the discharge of the cooling tower. Air enters the tower through louvres and is drawn vertically through the tower in a direction opposite to the flow of cooling water through the tower. Another type of cooling tower has a fan mounted on one side of the tower with air either forced or induced through the tower in a cross-flow manner past falling water. In any event, all known types of cooling towers involve the exposure of cooling water to air drawn or forced through the tower and the storage of water in a basin for a period of time prior to that cooled water being drawn by the pump 24 through piping 30. This type of arrangement is common as it is relatively inexpensive to use a fluid such as water to effect heat exchange and to pump that water to a roof top mounted heat exchanger in order to cool the water.

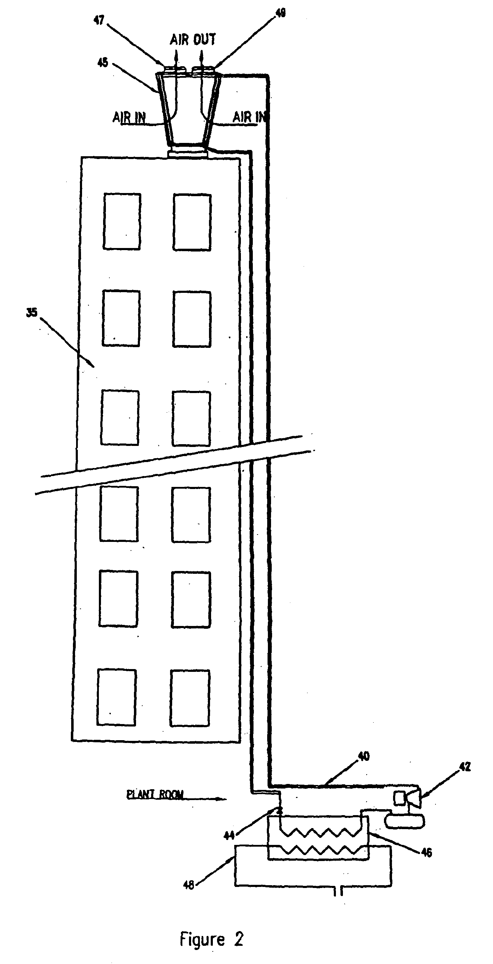

Figure 2 illustrates an alternative conventional cooling system arrangement wherein the system comprises an enclosed loop of refrigerant gas 40 which is compressed by means of a compressor 42. The refrigerant gas is passed through an evaporator 46 where it absorbs thermal energy from a water circuit 40. The cooling of air in the building 35 occurs in a similar manner as for the system described in Figure 1. However, in contrast to the system of Figure 1, the system illustrated in Figure 2 does not include a water cooled condenser and cooling tower arrangement for the purpose of removing thermal energy from the refrigerant gas. Instead, refrigerant gas is pumped from the basement of the building 35 up to the rooftop of the building and passed through an air cooled condenser 45. The air cooled condenser 45 includes electrically driven fans (47 and 49) for the purpose of drawing air through the air cooled condenser via air inlets and expelling the drawn air through air outlets.

Generally, refrigerant gas is contained in thermally conductive piping that is formed in a tortuous path which resides within a region of the air cooled condenser 45 and is subject to airflow.

The type of cooling system illustrated in Figure 2 is usually used in installations where the distance between the plant room and the air cooled condenser is sufficiently short to do so. If the distance is too long for it to be feasible to transfer gas, then alternative arrangement is sought. In most instances where a heat exchange unit will be mounted on the roof top of a building, the distance from the plant room to the heat exchange unit is sufficiently long to render this type of system infeasible.

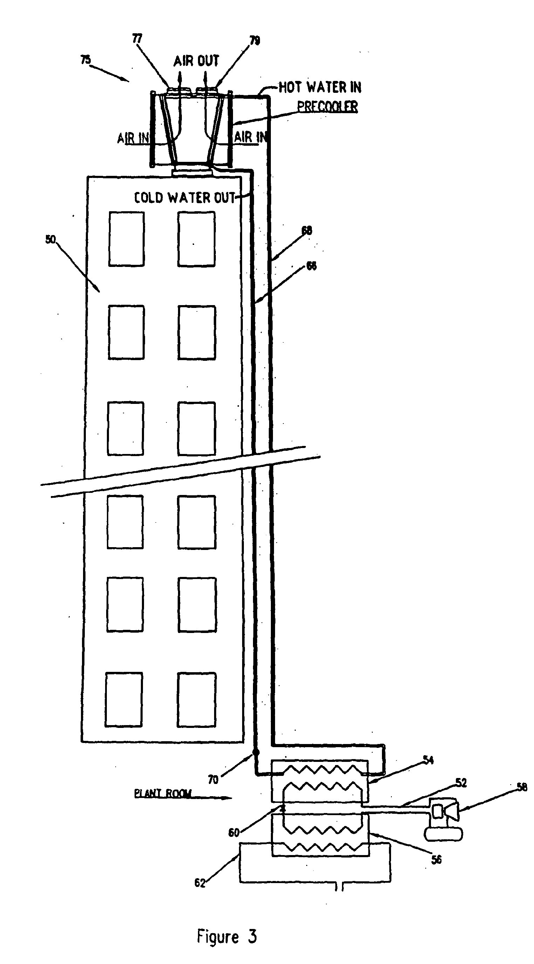

An embodiment of the present invention is illustrated in Figure 3 wherein a cooling system for a building 50 includes an enclosed, circuit of refrigerant gas 52 that is passed through a condenser 54 and an evaporator 56 by a compressor 58. The flow of gas through the enclosed circuit 52 is controlled by an expansion valve 60. The evaporator includes an enclosed water circuit 62 which has thermal energy removed therefrom in order for the enclosed water circuit 62 to be used to effect cooling of the air in the building 50 in a similar manner as described previously (refer Figure 1). As for the system illustrated in Figure 1, the condenser 54 operates as a heat exchanger to extract thermal energy from the enclosed loop of refrigerant gas 52.

The removal of thermal energy from the enclosed loop of refrigerant gas 52 in the condenser 54 is effected by the use of another fluid, usually water, which is drawn into the condenser 54 through piping 66 and carried out of the condenser 54 through piping 68. Cooling water is drawn into the condenser 54 and passed through it under the control of pump 70. Water emitted from the condenser 54 is carried by piping 68 to the rooftop of the building 50 where it enters a rooftop mounted heat exchanger 75.

The heat exchanger 75 includes electrically driven fans (77 and 79) that operate to draw air therethrough. The piping 68 is generally thermally conductive and formed in a tortuous path with that portion formed in a tortuous path disposed in a region that will be subject to air flow as air is drawn through the heat exchanger 75. Along the portion of the piping that is formed in a tortuous path, thermally conductive extensions may be connected to the piping 68 in order to improve the efficiency of removing thermal energy from the water in the piping 68 as air passes over the piping 68 and the thermally conductive extensions. Usually, thermally conductive extensions comprise heat fins formed from a suitably thermally conductive material. Having passed through the portion of piping formed in a tortuous path, the water is then carried out of the rooftop mounted heat exchanger 75 via piping 66 and is once again pumped into the condenser 54 by action of the pump 70.

In addition to passing cooling water through a portion of piping subject to forced airflow, the rooftop mounted heat exchanger 75 also includes moistened water absorbent material suspended over the air inlets of the heat exchangers 75 such that air drawn through the moistened water absorbent material is cooled by the action of evaporation prior to that air passing over the portion of piping 68 formed in a tortuous path. As a result of cooling air prior to passing it over piping carrying water emitted from the condenser 54, the effectiveness of removing thermal energy from that fluid is significantly increased.

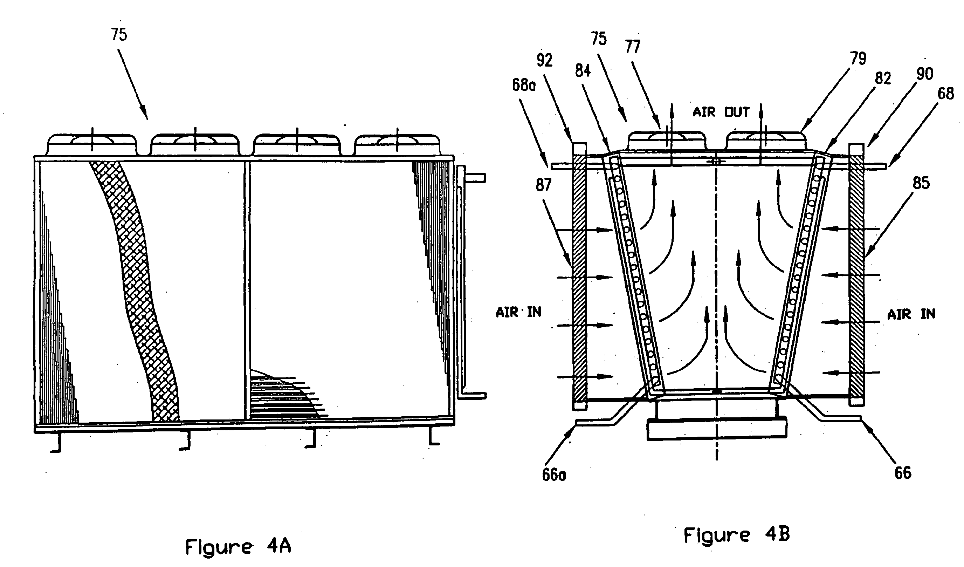

A side view and a sectioned view of the heat exchanger 75 are provided in Figures 4A and 4B respectively.

With reference to Figure 4B, the heat exchanger 75 includes electrically driven fans (77 and 79) arranged to draw air through the heat exchangers 75. The side walls of the heat exchanger (82 and 84) comprise thermally conductive piping formed in a tortuous path carrying water from the condenser 54 the piping residing in a region subject to air flow through the heat exchanger 75. The thermally conductive piping is wound through a tortuous path to extend substantially over the entire region subject to airflow and in the sectional view of Figure 4B, the piping extends substantially perpendicularly into and out of the plane of the diagram.

In the embodiment of the heat exchanger 75 as detailed in Figure 4B, the side walls 82 and 84 effectively form two banks of the heat exchangers, each acting to remove thermal energy from the water passing therethrough. In this respect, water enters the heat exchange banks 82 and 84 through inlets 68 and 68a and having passed through the respective heat exchange banks are emitted therefrom through corresponding outlets 66 and 66a. Water enters the heat exchange banks 82 and 84 through inlets 68 and 68a in a "hot" state and having had thermal energy extracted therefrom, the water is emitted from the heat exchange banks 82 and 84 through outlets 66 and 66a in a "cold" state. Of course, the inlets, 68 and 68a, may be connected by a common header. Similarly, the outlets, 66 and 66a, may also be connected to a common header.

Whilst thermal energy would be extracted from water passing through the heat exchange banks 82 and 84 solely by action of air drawn through those heat exchange banks, the efficiency of the extraction of thermal energy from water passing through the heat exchange unit is significantly improved by suspending moistened water absorbent material over the air inlets of the heat exchanger 75.

With reference to Figure 4B, water absorbent material pads 85 and 87 are suspended over the air inlets of the heat exchanger 75 such that air passing over the heat exchange banks 82 and 84 is required to pass through the water-absorbent material pads 85 and 87 first.

In a preferred embodiment, the water absorbent material pads 85 and 87 comprise material distributed under the trademark "Celdek" and these pads 85 and 87 are continually moistened by the application of water, to the top of each of the pads 85 and 87 at inlets 90 and 92. Water applied at inlets 90 and 92 eventually trickles down through the water absorbent material pads 85 and 87 substantially wetting the entire material pad. In the event that the material pads 85 and 87 do not fully absorb water applied to the inlets 90 and 92, run-off from the bottom of each pad may be collected in a tank (not detailed herein) that may be returned to the water inlets 90 and 92 via a pump (also not detailed).

Air drawn through the material pads 85 and 87 is cooled by the action of evaporation and the passing of this cooled air over the heat exchange banks 82 and 84 acts to significantly increase the efficiency of the extraction of thermal energy from water passing through those heat exchange banks.

In a particularly preferred embodiment, a water absorbent material pad comprising a plurality of fluted apertures of a size less than 7mm in diameter is used as part of the air cooler. Additionally, in this embodiment, variable pitch fans are used to draw air through the primary heat exchanger and the air cooler pads. The use of a water absorbent material pad with apertures of a diameter less than the standard diameter results in a more efficient air cooling effect and as such, the overall size of the water absorbent material pad may be reduced whilst still providing a similar cooling effect as a pad with larger apertures. A reduction in overall pad size may be critical for installations where the heat exchange unit must conform to physical space restrictions. In these instances, a reduced overall pad size may result in a heat exchange unit according to the present invention being a feasible option for that particular installation.

In a further embodiment, the cooling fluid comprises highly concentrated ammonia with a primary heat exchange unit comprising stainless steel or aluminium tubing effecting passage of the ammonia through the heat exchange unit. Whilst ammonia has previously been used as a cooling fluid, it has generally been restricted for use in very large installations. However, the improved cooling effect of a heat exchange unit according to the present invention enables the construction of a heat exchange unit comprising an ammonia cooling fluid of a reduced physical size with a similar cooling capacity as that for a larger sized conventional heat exchange unit. As a result, heat exchange units using ammonia as the cooling fluid become a more economically feasible option for relatively small installations.

The present invention embodies many advantages, the most significant of which being the provision of an alternative heat exchange unit that does not present a risk of generating and distributing airborne *legionella* bacterium that may be used to replace existing cooling tower heat exchange units. In this respect, whilst many approaches have been proposed for over coming the disadvantages of cooling towers and their susceptibility to generate and distribute the *legionella* bacterium, most of these approaches involve a substantial increase to the ongoing maintenance cost of the cooling system.

In contrast to most prior proposals, the current invention maintains cooling fluid in an entirely enclosed circuit such that the cooling fluid is not exposed to the environment. As such, the possibility of the cooling fluid distributing legionella bacterium into the environment in a system according to the present invention and under normal working conditions is completely eliminated.

Additionally, the arrangement of the current invention lends itself particularly well to the replacement of existing cooling tower arrangements by maintaining the use of a condenser in the basement of a building and the pumping of cooling fluid to a rooftop heat exchanger. In particular, the conversion of an existing cooling system arrangement incorporating a cooling tower to a system according to the present invention is relatively easily effected by the disconnection of water inlet and outlet conduits from the existing cooling tower, removal of the cooling tower and replacement therewith by a heat exchanger according to the present invention and reconnection of the fluid conduits.

It will be appreciated by persons skilled in the art that numerous variations and/or modifications may be made to the invention as shown in the specific embodiments without departing from the spirit or scope of the invention as broadly described. The present embodiments are, therefore, to be considered in all respects as illustrative and not restrictive.

## Claims

1. A water cooling heat exchange unit including a primary heat exchange unit including a closed circuit for fluid, an air cooler located upstream of said primary heat exchange unit, and a fan arrangement operable to force air through said air cooler and said primary heat exchange unit, wherein said air cooler includes a moisture absorbent material that is, in use, maintained moist such that air forced through said air cooler is cooled by the action of evaporation prior to being forced over a portion of the closed circuit in the primary heat exchange unit thus cooling the water contained therein.

2. A water cooling heat exchange unit according to claim 1 including a plurality of air inlets and outlets with the fan arrangement disposed therebetween and operable to draw air in through the plurality of inlets and force air out through the plurality of outlets.

3. A water cooling heat exchange unit according to claim 2 wherein a plurality of air coolers are located over said plurality of air inlets such that air drawn through said air coolers by the fan arrangement is cooled prior to being drawn or forced over the primary heat exchanger, the air subsequently being discharged through the plurality of air outlets.

4. A water cooling heat exchange unit according to any one of the preceding claims wherein the water passes through the primary heat exchange unit in thermally conductive tubing.

5. A water cooling heat exchange unit according to claim 4 wherein the thermally conductive material forming the tubing is copper.

6. A water cooling heat exchange unit according to claim 4 wherein the thermally conductive material forming the tubing is stainless steel.

7. A water cooling heat exchange unit according to any preceding claim wherein the absorbent material is moistened with water.

8. A water cooling heat exchange unit according to claim 7 wherein the water used to moisten the absorbent material is separate from the cooling water.

9. A water cooling heat exchange unit according to any one of the preceding claims where the fan arrangement includes variable pitch fans.

10. A water cooling heat exchange unit according to any one of the preceding claims wherein the cooling water is treated with chemicals to prevent corrosion and/or rust of metallic parts.

11. A water cooling heat exchange unit according to any preceding claim wherein the cooled air emitted from the air cooler is substantially free of fluid in a liquid state.

12. A water cooling heat exchange unit according to any preceding claim wherein the air cooler and the primary heat exchange unit are separated by a distance along the path of air flow from the cooler to the primary heat exchange unit to reduce the likelihood of fluid in a liquid state passing from the air cooler and impinging upon the primary heat exchange unit.

13. A method of cooling water in a water cooling heat exchange unit, the method including the steps of passing cooling water of a cooling system through a primary heat exchanger having a closed water circuit such that the water is contained, placing an air cooler upstream of the primary heat exchanger, and causing a flow of air through said air cooler and over a portion of the closed water circuit wherein said air cooler includes a moisture absorbent material that is, in use, maintained moist such that the air is cooled by vaporizing the fluid.

14. A method of converting a cooling system incorporating a first heat exchange unit including a water cooling heat exchange unit where the water is exposed to air drawn through the heat exchange unit by replacing said first heat exchange unit with a second heat exchange unit including a primary heat exchanger and an air cooler including a moisture absorbent material that is, in use, maintained moist such that air forced through the air cooler is cooled by the action of vaporisation where the water in the primary heat exchange unit is contained and prevented from exposure to air forced through the air cooler and then subsequently passed through the second heat exchange unit, the method including of steps of disconnecting the first heat exchange unit cooling water inlet and outlet connection, reconnecting the water inlet and outlet to the corresponding connection points of the second heat exchange unit, and operating the cooling system.

15. A cooling system having a water cooling heat exchange unit including: a primary heat exchange unit including a closed circuit for cooling water; an air cooler including a moisture absorbent material that is maintained moist for cooling air by evaporation said air cooler located upstream of said primary heat exchange unit; and a fan arrangement operable to force air through said air cooler and said primary heat exchange unit, wherein air forced through said air cooler is cooled prior to being forced over a portion of said closed circuit in said primary heat exchange unit.

16. A cooling system having a water cooling heat exchange unit including a primary heat exchange unit including a closed circuit for circulating water, and a secondary heat exchange unit including a moisture absorbent material that is, in use, maintained moist, the secondary heat exchange unit adapted to provide air cooled by the action of evaporation in communication with said primary heat exchange unit.
